# EUROPEAN PATENT SPECIFICATION

(11) **EP 3 546 208 B1**
(45) Date of publication and mention of the grant of the patent: **20.08.2025**
(21) Application number: 19164146.3
(22) Date of filing: 20.03.2019
(51) Int. Cl.: B32B 5/02, B32B 5/08, B32B 5/18, B32B 5/24, B32B 7/12, B32B 37/00

(54) **FLEXIBLE BACKING LAYER FOR INSULATING PANELS AND INSULATING PANEL AND MANUFACTURING METHOD**
FLEXIBLE RÜCKSCHICHT FÜR ISOLIERPLATTEN UND ISOLIERPLATTE UND HERSTELLUNGSVERFAHREN
COUCHE DE SUPPORT FLEXIBLE POUR PANNEAUX ISOLANTS ET PANNEAU ISOLANT ET PROCÉDÉ DE FABRICATION

(30) Priority: 30.03.2018 IT 201800004127
(43) Date of publication of application: 02.10.2019
(73) Proprietor: Elements S.r.l., 31048 San Biagio di Callalta (TV) (IT)
(72) Inventor: FAOTTO, Ugo, 31048 San Biagio di Callalta, TREVISO (IT); FAOTTO, Giovanni, 1048 San Biagio di Callalta, TREVISO (IT)
(74) Representative: Pennacchio, Salvatore Giovanni

(56) References cited:
- WO-A1-2016/120749
- WO-A2-2017/083345

## Description

The present invention relates to a flexible support for insulating panels and to a multilayer insulating construction panel, in particular a thermal-insulating panel made of an expanded synthetic material, e.g. expanded polyurethane, provided with a multilayer support coating on one or both the outer opposite faces of the panel.

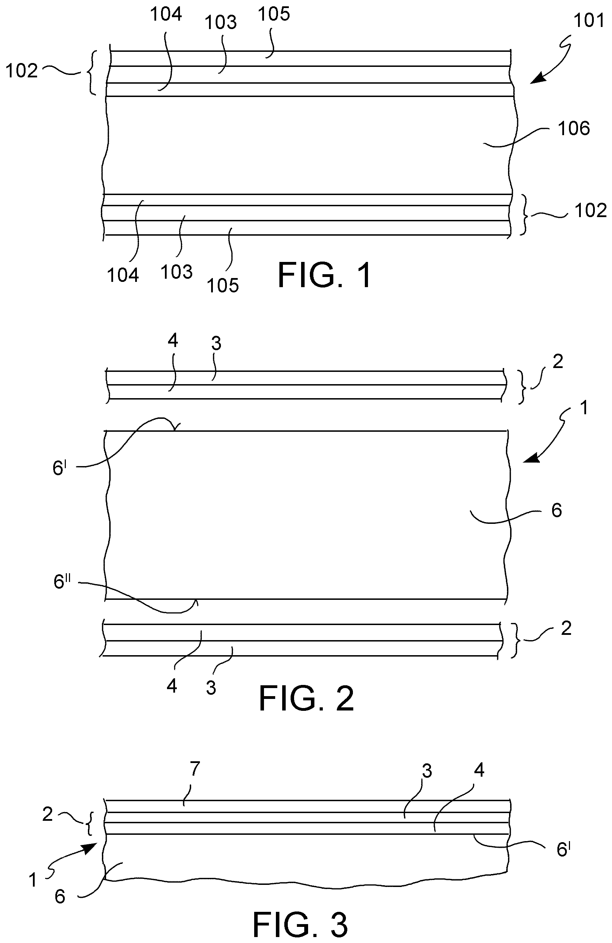

Multilayer insulating panels are widely used in building constructions, for example to ensure the thermal insulation of walls, floors and roofs or of coverings in general. For example, WO 2016/120749 A1 discloses a multilayer thermal insulation panel for building constructions, wherein a backing layer having increased properties of adhesion to an insulating layer of the panel is used. The known insulating construction panels 101 (**Figure 1**) comprise a thermal-insulating layer 106, for example made of expanded polyurethane, interposed between two support layers 102 adapted to cover the thermal-insulating layer 106 on the largest faces thereof (not the outer delimiting or cutting edges). The support layers 102 perform a dual role: they contain the expansion of the polyurethane foam during the manufacturing of panel 101 on the one hand, and they give the formed panel 101 a preset shape and thickness and contribute to the dimensional stability and mechanical resistance thereof, e.g. bending resistance, to impacts, abrasion, on the other.

The support layers 102 are in turn made as a multilayer structure having a layer of bitumen 103 interposed between a reinforcing layer 104 made of a fibrous material, e.g. glass fibers, and an outer finishing layer 105, e.g. a fabric.

The support layer (prior to the application on and integration thereof with the thermal-insulating layer of expanded polyurethane) is flexible, bendable and may be wound in rolls without undergoing damage or structural alterations thanks to the materials of the individual layers of bitumen, reinforcing and finishing layers, and to the overall reduced thickness.

The application and fastening of the support layer on the thermal-insulating polyurethane layer occurs by adhesion between the reinforcing layer and the polyurethane layer, for example by means of the polyurethane itself in the step of expansion and crosslinking.

The thermoplastic features of the bitumen support layers are highly appreciated because they facilitate handling and processing the support layers prior to and during the manufacturing of the multilayer insulating panel. Moreover, they have increased compatibility with the bitumen membranes, which are applied to the top of the insulating panels by means of torch application.

It is known to use insulating panels with a so-called mineralized support layer for the applications of the insulating panels which require the application without bitumen membranes, but in association with synthetic membranes or sub-shingle layers applied by means of mechanical fastening or gluing.

Moreover, in the highly common application of the thermal-insulating panels together with further waterproofing membranes, the thermal-insulating panels with bitumen support layers necessarily require the waterproofing membrane also to be made of a bitumen material because the known fastening technique consists in adhering by means of torch application, i.e. by means of softening the bitumen using a flame.

In the case of thermal-insulating panels with mineralized support layers, the only manner of fastening the thermal-insulating panel to the waterproofing membrane or to a sub-shingle membrane is fastening by means of mechanical fastening members or by means of gluing, neither easy to execute.

It is therefore the object of the present invention to make available a support layer for a thermal-insulating panel and a multilayer thermal-insulating construction panel having such features to obviate the drawbacks described with reference to the known art.

It is a particular object of the invention to make available a support layer for a thermal-insulating panel having such features as to reconcile the needs of:
- good adhesion and versatile fastening suitability to a plastic and/or bitumen waterproofing membrane,
- flexibility and windability of the support layer prior to the application thereof onto the insulating panel,
- mechanical resistance,
- applicability in a wide temperature range,
- suitability for industrially manufacturing the insulating panel made of an expanded/extruded synthetic material, in particular expanded polyurethane,
- absence of bitumen in the coating to the advantage of more environmentally-sustainable resins and with less impact on emissions.

It is a further object of the invention to propose a support layer for a thermal-insulating panel and a multilayer thermal-insulating construction panel having the appreciated features of panels with bitumen support layer and with mineralized support layer, moreover without suffering the disadvantages thereof described above.

These and other objects are achieved by means of a support layer for an insulating construction panel according to claim 1, and also by means of an insulating construction panel according to claim 5 and not lastly, by means of the method for manufacturing a support layer for an insulating construction panel according to claim 8.

Preferred and advantageous embodiments are the object of the dependent claims.

Further features and advantages of the support layer and of the insulating panel according to the invention will become apparent from the description of preferred embodiments thereof, given only by way of non-limiting, indicative examples, with reference to the drawings, in which:
**figure 1** is a cross-section view of a thermal-insulating construction panel according to the known art,
**figure 2** is a cross-section view of a thermal-insulating construction panel according to one embodiment, in which two outer support layers are depicted detached from (or not yet joined with) an inner insulating layer made of an expanded synthetic material,
**figure 3** is a partial cross-section view of a thermal-insulating construction panel according to one embodiment, joined with a further waterproofing membrane, for example made of plastic or bitumen.

With reference to figures 2 and 3, a multilayer construction panel with thermal insulating and/or acoustic properties is indicated as a whole with numeral 1.

The insulating panel 1 advantageously can be used in the construction field for covering and/or thermally and/or acoustically insulating walls, floors and roofs.

The insulating panel 1 comprises a main layer 6 made of an insulating material, advantageously made of an expanded polyurethane, having an opposite first surface 6' and a second surface 6" (here, the largest surfaces are meant, and not the contour surfaces showing the stratification of panel 1).

The insulating panel 1 further comprises at least one support layer 2 connected to the main layer 6 along at least one or both the first 6' and second 6" surfaces. In other words, the main layer 6 is covered on at least one side by means of the support layer 2 or is interposed between two support layers 2.

The support layer 2 comprises a reinforcing layer 4 made of a fibrous material.

According to an advantageous embodiment, the reinforcing layer 4 is made of glass fiber or hybrid glass fibers, for example containing, in addition to the glass fibers, from 40% to 60% of polyethylene terephthalate or PET, or is made of natural, mineral and/or synthetic or mixed fibers.

According to embodiments, the reinforcing layer 4 may be formed by:
- a non-woven fabric, for example consisting of or containing the aforesaid fibrous material,
- a fabric (warp-weave), for example consisting of or containing the aforesaid fibrous material, and/or
- a mesh, for example consisting of or containing the aforesaid fibrous material, and/or
- non-woven glass fiber fabric,
- glass fibers,
- hybrid glass fibers containing glass fibers and PET,
- natural, mineral and/or synthetic mixed fibers.

The reinforcing layer 4 is turned to and faces and is connected with the respective outer surface 6', 6" of the main layer 6.

The reinforcing layer 4 may be treated by means of a flame retardant substance.

The reinforcing layer 4 gives mechanical resistance and/or dimensional stability to the support layer 2, and therefore to the insulating panel 1.

According to one aspect of the invention, the support layer 2 further comprises a coating layer 3 made by applying a dispersion of a thermoplastic compound on the reinforcing layer 4, followed by drying, in particular at a high temperature.

According to an advantageous embodiment, said dispersion may be an aqueous dispersion in which the dispersing step is water. Alternatively, the dispersing step of the dispersion may comprise an organic or inorganic liquid.

The coating layer 3 substantially is uniformly spread over the reinforcing layer 4 in order to cover the whole surface thereof to obtain a substantial uniformity of properties and thickness of the support layer 2.

The application of dispersion thermoplastic polymer(s) on the reinforcing layer 4 allows making a support layer 2 with outer thermoplastic surface suitable for combined use with a waterproofing membrane 7 (**figure 3**) both made of plastic material and made of bituminous material, both by means of application/hot fastening techniques and by means of gluing, thereby facilitating and optimizing the adhesion between the waterproofing membrane 7 and the outer surface of the insulating panel 1.

Making the support layer 2 and the insulating panel 1 by means of a coating layer 3 of polymeric thermoplastic material, in particular made by means of the application of a dispersion, for example a water dispersion, of thermoplastic polymers on the reinforcing layer 4 also allows the following to be obtained and combined with one another:
- flexibility and windability of the support layer 2,
- mechanical resistance of the support layer 2 and of the insulating panel 1,
- applicability of the insulating panel 1 in a wide temperature range,
- suitability of the support layer 2 for industrially manufacturing the insulating panel 1 made of an expanded material and/or extruded synthetic material, in particular expanded polyurethane.

According to one embodiment, fastening the waterproofing membrane 7 to the insulating panel 1 occurs by means of:
- softening the coating layer 3 and simultaneously the waterproofing membrane 7 by means of heating (for example, hot air, for example dryer or hot air gun),
- pressing the heated and softened coating layer 3 to put it into contact with the waterproofing membrane 7 (for example, by applying a pressure by means of a roller),
- successive cooling (preferably at room temperature) of the coating layer 3 in contact with the waterproofing membrane 7 so as to obtain an adhesion thereof by means of re-crosslinking the coating layer 3.

This allows an improved adherence of the waterproofing membrane 7 to the insulating panel 1 and at the same time, it does not damage the insulating panel 1. Thereby, the use of open flames (open flame torch application), with the subsequent risk of fires, is avoided.

The thermoplastic polymer or mixture of polymers of the coating layer 3 is selected so that, when heating at an activation temperature higher than 130°, a softening of the coating layer 3 occurs. This ensures a good adhesion and versatile fastening of the waterproofing membrane 7 to the insulating panel 1 through the simple hot air heating.

According to a preferred embodiment, the thermoplastic polymer or mixture of polymers of the coating layer 3 is selected so that, when heating at an activation temperature equal to or higher than 150°, a softening of the coating layer 3 occurs.

The Applicant has noted through laboratory tests that the adhesion of the waterproofing membrane 7 to the insulating panel 1 in such a preferred embodiment is optimal. This obviates the risk of an involuntary activation following the exposure of the support layer 2 to increased temperatures during the manufacturing, storing, placement and use over time of the insulating panel 1 and/or of the support layer 2 thereof.

According to one embodiment, the thermoplastic polymer or mixture of polymers of the coating layer 3 takes on a viscous and softened state as the temperature increases beyond the activation temperature, and it solidifies or re-solidifies following a lowering of temperature below the activation temperature. For this purpose, the thermoplastic polymer or mixture of polymers of the coating layer 3 may be selected from polymers forming linear chains or linear chains with few branches.

According to the selected polymers, the melting/solidifying cycle of the coating layer 3 may be repeated in certain cases, thus allowing a fastening correction during the placement or a detachment and re-fastening of the insulating panel 1 to the waterproofing membrane 7 in case of repairs and maintenance.

According to a further embodiment, the waterproofing membrane 7 may be a self-adhesive membrane having an adhesive surface thereof. In this embodiment, the fastening of the self-adhesive waterproofing membrane 7 to the insulating panel 1 occurs by means of pressing the coating layer 3 into contact with the adhesive surface of the waterproofing membrane 7, for example without the need for heating (for example, by applying a pressure by means of a roller).

The inert fillers may be inorganic or organic substances in the form of powders, flakes, hollow spheres, rubber powders, vegetable grit, granules or fibers. The most used are minerals such as carbonates and talcs, but also oxides, hydroxides, sulfates, phosphates.

The thermoplastic compound used for the coating layer 3 comprises (percentages by weight):
40 to 70% of resins in aqueous dispersion, acrylic styrol resin and vinyl resin, respectively, in ratio of 80:20
5 to 20% of inert fillers,
5 to 10% additives (e.g. foam inhibitors, water-repellent products, dispersants, spreaders),
0.1 to 4% of thickeners.

The application and fastening of the support layer 2 on the main layer 6 occurs for example, by adhesion between the reinforcing layer 4 of the support layer 2 and the main layer 6, for example by means of the synthetic material, e.g. polyurethane, of the main layer 6 in expansion phase.

According to one embodiment, the manufacturing method of the support layer 2 comprises the steps of:
- providing the reinforcing layer 4,
- making the coating layer 3 by applying a dispersion of the thermoplastic compound (dispersed step), on the reinforcing layer 4, followed by drying, preferably at a high temperature.

The high temperature drying step may be performed by positioning the support layer 2 in, or causing it to pass through, a hot air oven, e.g. at a temperature between 100°C and 250°C.

The method may also comprise the step of winding the support layer 2 to form a roll suitable for transport and/or being used in an unwinding system of the support layer 2 during the manufacturing of the insulating panel 1.

According to one embodiment, manufacturing the support layer 2 is continuously executed by means of a roll-to-roll type system and process in which the reinforcing layer 4 made of a fibrous material is continuously unwound (upstream), with simultaneous application (further downstream) of the coating layer 3 on the unwound reinforcing layer 4, and with simultaneous drying (even further downstream) of the spread coating layer 3, and with the rewinding (even further downstream) of the support layer 2 obtained after drying the coating layer 3.

According to one embodiment, the manufacturing method of the insulating panel 1 comprises the steps of:
- forming the main layer 6 made of an expanded synthetic material, e.g. polyurethane.
- applying the support layer 2 on one only or both the opposite first and second surfaces 6', 6" of the main layer 6, with the reinforcing layer 4 facing the main layer 6.

The formation of the main layer 6 may comprise a step of spraying and/or extruding and/or spreading a polymeric foam, e.g. polyurethane, over a first support layer 2 alone, and then applying a second support layer 2 on the main polymer layer 6 formed following the expansion of the polymer foam, so that such a main layer 6 of panel 1 is interposed between the two supports 2. Alternatively, the formation of the main layer 6 may comprise a step of spraying and/or extruding and/or spreading the polymeric foam, e.g. polyurethane, in a gap between two of the aforesaid previously made supports layers 2 so that the support layers 2 form a delimitation for the expansion of the polymer foam which forms the main insulating layer 6.

According to a further embodiment, the step of applying the support layer 2 may comprise gluing the support layer 2 on one alone or both the opposite first and second surfaces 6', 6" of the already formed main layer 6 (for example, already completely expanded and shaped, or made of fibrous insulating material), with the reinforcing layer 4 facing the main layer 6.

By way of advantageous example, the main thermal-insulating layer 6 may be made of an expanded polyurethane or of an expanded or extruded polystyrene, or of a phenolic foam, or of a fibrous insulating material.

Each of the individual features described by way of example combined with other features is to be intended as also described in independent and isolated manner and therefore, also applicable to other described embodiments of the support layer 2, the insulating panel 1 and the manufacturing methods. These embodiments with isolated features or combined with features of other embodiments are expressly contemplated for but are not herein described for reasons of brevity.

## Claims

1. A support layer (2) for an insulating construction panel (1) of the type comprising:
- a main layer (6) made of a thermally insulating material comprising a first surface (6') and an opposite second surface (6"),
- at least one support layer (2) connected to the main layer (6) along at least one of said first and second surfaces (6', 6"),
wherein said support layer (2) comprises a reinforcing layer (4) made of a fibrous material intended to face and be connected to the main layer (6), as well as a coating layer (3),
said coating layer (3) is made by applying a dispersion of at least one thermoplastic polymer on the reinforcing layer (4), followed by drying,
**characterized in that**
the at least one thermoplastic polymer of the coating layer (3) is selected so that a softening of the coating layer (3) occurs when said at least one thermoplastic polymer is heated at an activation temperature higher than 130°C, and it solidifies or re-solidifies following a lowering of temperature below the activation temperature;
said coating layer (3) is made by applying on the reinforcing layer (4) a thermoplastic compound comprising:
40 to 70% (by weight) of acrylic styrol and vinyl resins in aqueous dispersion, in ratio of 80:20, respectively,
5 to 20% (by weight) of inert fillers,
5 to 10 % (by weight) of additives, e.g. foam inhibitors, water-repellent products, dispersants, spreaders,
0.1 to 4% (by weight) of thickeners.

2. A support layer (2) according to claim 1, wherein the at least one thermoplastic polymer of the coating layer (3) is selected so that, when heating at an activation temperature higher than 150°C, a softening of the coating layer (3) occurs.

3. A support layer (2) according to one of the preceding claims, wherein the coating layer (3) comprises the inert fillers selected from the group consisting of inorganic or organic substances in the form of powders, flakes, hollow spheres, rubber powders, vegetable grit, granules or fibers, carbonates and talcs, oxides, hydroxides, sulfates, phosphates.

4. A support layer (2) according to one of the preceding claims, wherein the fibrous material of the reinforcing layer (4) is selected from the group consisting of:
- non-woven fabric,
- fabric (warp-weave)
- net
- non-woven glass fiber fabric,
- glass fibers,
- hybrid glass fibers containing glass fibers and PET,
- natural, mineral and/or synthetic mixed fibers.

5. An insulating construction panel (1) comprising:
- a main layer (6) made of a thermally insulating material comprising a first surface (6') and an opposite second surface (6"),
- the support layer (2) according to any one of the preceding claims connected to the main layer (6) along at least one of said first and second surfaces (6', 6") with the reinforcing layer (4) facing the main layer (6).

6. An insulating construction panel (1) according to claim 5, wherein the support layer (2) is attached to the main layer (6) by gluing the reinforcing layer (4) of the support layer (2) to the main layer (6) by means of a synthetic material of the main layer (6) in expansion phase.

7. A multilayer thermal insulation and waterproofing construction structure, comprising the insulating panel (1) according to one of claims 5 or 6 and a waterproofing membrane (7) made of a plastic or bituminous material, wherein said waterproofing membrane (7) is attached to the insulating panel (1) by hot-softening and re-crosslinking the coating layer (3) in contact with the waterproofing membrane (7).

8. A method for manufacturing a support layer (2) for an insulating construction panel (1) of the type comprising:
- a main layer (6) made of a thermally insulating material comprising a first surface (6') and an opposite second surface (6"),
- at least one support layer (2) connected to the main layer (6) along at least one of said first and second surfaces (6', 6"),
wherein said method comprises:
- providing a reinforcing layer (4) made of a fibrous material,
- making a coating layer (3) by applying a dispersion of at least one thermoplastic polymer, on the reinforcing layer (4), followed by drying,
wherein the at least one thermoplastic polymer of the coating layer (3) is selected so that a softening of the coating layer (3) occurs when said at least one thermoplastic polymer is heated at an activation temperature higher than 130°C, and it solidifies or re-solidifies following a lowering of temperature below the activation temperature;
said coating layer (3) is made by applying on the reinforcing layer (4) a thermoplastic compound comprising:
40 to 70% (by weight) of acrylic styrol and vinyl resins in aqueous dispersion, in ratio of 80:20, respectively,
5 to 20% (by weight) of inert fillers,
5 to 10 % (by weight) of additives (e.g. foam inhibitors, water-repellent products, dispersants, spreaders),
0.1 to 4% (by weight) of thickeners.

9. A manufacturing method according to claim 8, wherein the drying step is performed by positioning the support layer (2) in a hot air oven, at a temperature between 100°C and 250°C.

10. A manufacturing method according to claim 8 or 9, comprising the steps of:
- unwinding the reinforcing layer (4) made of a fibrous material from a roll,
- while unwinding the reinforcing layer (4), applying the coating layer (3) by spreading it over the unwound reinforcing layer (4),
- while applying the coating layer (3), drying the spread coating layer (3),
- while drying the spread coating layer (3), rewinding the support layer (2) obtained after drying the coating layer (3).

## Patentansprüche

1. Trägerschicht (2) für eine isolierende Bauplatte (1) der Art umfassend:
- eine Hauptschicht (6), die aus einem wärmeisolierenden Material besteht, umfassend eine erste Oberfläche (6') und eine gegenüberliegende zweite Oberfläche (6"),
- mindestens eine Trägerschicht (2), die mit der Hauptschicht (6) entlang mindestens einer der ersten und zweiten Oberflächen (6', 6") verbunden ist,
wobei die Trägerschicht (2) eine Verstärkungsschicht (4) umfasst, die aus einem faserigen Material besteht, die der Hauptschicht (6) zugewandt ist und mit dieser verbunden ist, sowie eine Beschichtungsschicht (3), wobei die Beschichtungsschicht (3) durch Auftragen einer Dispersion aus mindestens einem thermoplastischen Polymer auf die Verstärkungsschicht (4) und anschließendes Trocknen hergestellt wird,
**dadurch gekennzeichnet, dass**
das mindestens eine thermoplastische Polymer der Beschichtungsschicht (3) ausgewählt wird, sodass ein Erweichen der Beschichtungsschicht (3) erfolgt, wenn das mindestens eine thermoplastische Polymer auf eine Aktivierungstemperatur über 130 °C erhitzt wird, und sodass es sich verfestigt oder erneut verfestigt, wenn die Temperatur unter die Aktivierungstemperatur gesenkt wird;
die Beschichtungsschicht (3) durch Auftragen einer thermoplastischen Verbindung auf die Verstärkungsschicht (4) umfassend:
40 bis 70-% (nach Gewicht) Acryl-, Styrol- und Vinylharze in wässriger Dispersion im Verhältnis von jeweils 80:20,
5 bis 20% (nach Gewicht) inerte Füllstoffe,
5 bis 10 % (nach Gewicht) Additive, z. B. Schaumverhüter, wasserabweisende Produkte, Dispergiermittel, Diffusionsmittel,
0,1 bis 4% (nach Gewicht) Verdickungsmittel, hergestellt wird.

2. Trägerschicht (2) nach Anspruch 1, wobei das mindestens eine thermoplastische Polymer der Beschichtungsschicht (3) ausgewählt wird, sodass ein Erweichen der Beschichtungsschicht (3) beim Erhitzen auf eine Aktivierungstemperatur über 150 °C erfolgt.

3. Trägerschicht (2) nach einem der vorangehenden Ansprüche, wobei die Beschichtungsschicht (3) die inerten Füllstoffe enthält, die aus der Gruppe bestehend aus anorganischen oder organischen Stoffen in Form von Pulvern, Flocken, Hohlkügelchen, Gummipulvern, pflanzlichem Granulat, Granulaten oder Fasern, Karbonaten und Talken, Oxiden, Hydroxiden, Sulfaten, Phosphaten, ausgewählt wird.

4. Trägerschicht (2) nach einem der vorangehenden Ansprüche, wobei das faserige Material der Verstärkungsschicht (4) aus der Gruppe bestehend aus:
- Vliesstoff,
- Gewebe (Kette-Schuss),
- Netz,
- Glasfaservliesstoff,
- Glasfasern,
- Hybrid-Glasfasern enthaltend Glasfasern und PET,
- gemischte Natur-, Mineral- und/oder synthetischen Fasern.

5. Isolierende Bauplatte (1), umfassend:
- eine Hauptschicht (6), die aus einem wärmeisolierenden Material besteht, umfassend eine erste Oberfläche (6') und eine gegenüberliegende zweite Oberfläche (6"),
- die Trägerschicht (2) nach einem der vorangehenden Ansprüche, die mit der Hauptschicht (6) entlang mindestens einer der ersten und zweiten Oberflächen (6', 6") verbunden ist, wobei die Verstärkungsschicht (4) der Hauptschicht (6) zugewandt ist.

6. Wärmeisolierende Bauplatte (1) nach Anspruch 5, wobei die Trägerschicht (2) an der Hauptschicht (6) befestigt wird, indem die Verstärkungsschicht (4) der Trägerschicht (2) durch ein synthetisches Material der Hauptschicht (6) in einer Ausdehnungsphase mit der Hauptschicht (6) verklebt wird.

7. Mehrschichtige wärmeisolierende und wasserdichte Baustruktur umfassend die Isolierplatte (1) nach einem der Ansprüche 5 oder 6 und eine wasserdichte Membran (7),die aus einem Kunststoff- oder Bitumenmaterial besteht, wobei die wasserdichte Membran (7) mit der Isolierplatte (1) durch Heißerweichen und Wiedervernetzen der Beschichtungsschicht (3) in Kontakt mit der wasserdichten Membran (7) verbunden ist.

8. Verfahren zum Herstellen einer Trägerschicht (2) für eine isolierende Bauplatte (1) der Art umfassend:
- eine Hauptschicht (6), die aus einem wärmeisolierenden Material besteht, die eine erste Oberfläche (6') und eine gegenüberliegende zweite Oberfläche (6") umfasst,
- mindestens eine Trägerschicht (2), die mit der Hauptschicht (6) entlang mindestens einer der ersten und zweiten Oberflächen (6', 6") verbunden ist,
wobei das Verfahren umfasst:
- Bereitstellen einer Verstärkungsschicht (4), die aus einem faserigen Material besteht,
- Herstellen einer Beschichtungsschicht (3) durch Auftragen einer Dispersion aus mindestens einem thermoplastischen Polymer auf die Verstärkungsschicht (4), mit anschließendem Trocknen,
wobei das mindestens eine thermoplastische Polymer der Beschichtungsschicht (3) ausgewählt wird, sodass ein Erweichen der Beschichtungsschicht (3) erfolgt, wenn das mindestens eine thermoplastische Polymer auf eine Aktivierungstemperatur über 130 °C erhitzt wird, und es sich verfestigt oder erneut verfestigt, wenn die Temperatur unter die Aktivierungstemperatur gesenkt wird;
die Beschichtungsschicht (3) durch Auftragen einer thermoplastischen Verbindung auf die Verstärkungsschicht (4) umfassend:
40 bis 70 % (nach Gewicht) Acryl-, Styrol- und Vinylharze in wässriger Dispersion im Verhältnis von jeweils 80:20,
5 bis 20 % (nach Gewicht) inerte Füllstoffe,
5 bis 10 % (nach Gewicht) Additive (z. B. Schaumverhüter, wasserabweisende Produkte, Dispergiermittel, Diffusionsmittel),
0,1 bis 4% (nach Gewicht) Verdickungsmittel.

9. Herstellungsverfahren nach Anspruch 8, wobei der Trocknungsschritt durch Positionieren der Trägerschicht (2) in einen Heißluftofen bei einer Temperatur zwischen 100 °C und 250 °C durchgeführt wird.

10. Herstellungsverfahren nach Anspruch 8 oder 9, umfassend die folgenden Schritte:
- Abwickeln der Verstärkungsschicht (4) bestehend aus faserigem Material von einer Rolle,
- während des Abwickelns der Verstärkungsschicht (4) Auftragen der Beschichtungsschicht (3) durch Streichen über die abgewickelte Verstärkungsschicht (4),
- während des Auftragens der Beschichtungsschicht (3) Trocknen der gestrichenen Beschichtungsschicht (3),
- während des Trocknens der gestrichenen Beschichtungsschicht (3) Aufwickeln der Trägerschicht (2), die nach dem Trocknen der Beschichtungsschicht (3) erhalten wurde

## Revendications

1. Couche de support (2) pour un panneau de construction isolant (1) du type comprenant :
- une couche principale (6) constituée d'un matériau isolant thermique comprenant une première surface (6') et une seconde surface opposée (6"),
- au moins une couche de support (2) connectée à la couche principale (6) le long d'au moins une desdites première et seconde surfaces (6', 6"),
dans laquelle ladite couche de support (2) comprend une couche de renfort (4) constituée d'un matériau fibreux destinée à faire face à et être connectée à la couche principale (6), ainsi qu'une couche de revêtement (3),
ladite couche de revêtement (3) est réalisée par application d'une dispersion d'au moins un polymère thermoplastique sur la couche de renfort (4), suivie d'un séchage,
**caractérisée en ce que**
le ou les polymères thermoplastiques de la couche de revêtement (3) sont choisis de manière qu'un ramollissement de la couche de revêtement (3) ait lieu lorsque au moins un polymère thermoplastique est chauffé à une température d'activation supérieure à 130°C, et qu'il se solidifie ou se re-solidifie après un abaissement de la température en dessous de la température d'activation ;
ladite couche de revêtement (3) est réalisée par application sur la couche de renfort (4) d'un composé thermoplastique comprenant :
40 à 70 % (en poids) de résines acryliques, styréniques et vinyliques en dispersion aqueuse, dans un rapport de 80:20 respectivement,
5 à 20 % (en poids) de charges inertes,
5 à 10 % (en poids) d'additifs, par exemple des agents anti-mousse, des produits hydrofuges, des dispersants, des agents d'étalement,
0,1 à 4 % (en poids) d'épaississants.

2. Couche de support (2) selon la revendication 1, dans au moins un polymère thermoplastique de la couche de revêtement (3) est choisi de manière qu'un ramollissement de la couche de revêtement (3) ait lieu lors d'un chauffage à une température d'activation supérieure à 150°C.

3. Couche de support (2) selon l'une quelconque des revendications précédentes, dans laquelle la couche de revêtement (3) comprend les charges inertes choisies dans le groupe constitué de substances inorganiques ou organiques sous forme de poudres, flocons, sphères creuses, poudres de caoutchouc, graviers végétaux, granulés ou fibres, carbonates et talcs, oxydes, hydroxydes, sulfates, phosphates.

4. Couche de support (2) selon l'une quelconque des revendications précédentes, dans laquelle le matériau fibreux de la couche de renfort (4) est choisi dans le groupe constitué de :
- tissu non tissé,
- tissu (chaîne-trame),
- filet,
- tissu non tissé en fibres de verre,
- fibres de verre,
- fibres de verre hybrides contenant des fibres de verre et du PET,
- fibres naturelles, minérales et/ou synthétiques mélangées.

5. Panneau de construction isolant (1) comprenant :
- une couche principale (6) constituée d'un matériau isolant thermique comprenant une première surface (6') et une seconde surface opposée (6"),
- la couche de support (2) selon l'une quelconque des revendications précédentes connectée à la couche principale (6) le long d'au moins une desdites première et seconde surfaces (6', 6"), avec la couche de renfort (4) faisant face à la couche principale (6).

6. Panneau de construction isolant (1) selon la revendication 5, dans lequel la couche de support (2) est fixée à la couche principale (6) par collage de la couche de renfort (4) de la couche de support (2) à la couche principale (6) au moyen d'un matériau synthétique de la couche principale (6) en phase d'expansion.

7. Structure de construction multicouche d'isolation thermique et d'étanchéité comprenant le panneau isolant (1) selon l'une des revendications 5 ou 6 et une membrane d'étanchéité (7) constituée d'un matériau plastique ou bitumineux, dans laquelle ladite membrane d'étanchéité (7) est fixée au panneau isolant (1) par ramollissement à chaud et re-réticulation de la couche de revêtement (3) en contact avec la membrane d'étanchéité (7).

8. Procédé de fabrication d'une couche de support (2) pour un panneau de construction isolant (1) du type comprenant :
- une couche principale (6) constituée d'un matériau isolant thermique comprenant une première surface (6') et une seconde surface opposée (6"),
- au moins une couche de support (2) connectée à la couche principale (6) le long d'au moins une desdites première et seconde surfaces (6', 6"),
dans lequel ledit procédé comprend :
- la fourniture d'une couche de renfort (4) constituée d'un matériau fibreux,
- la réalisation d'une couche de revêtement (3) par application d'une dispersion d'au moins un polymère thermoplastique sur la couche de renfort (4), suivie d'un séchage,
dans lequel l'au moins un polymère thermoplastique de la couche de revêtement (3) est choisi de manière qu'un ramollissement de la couche de revêtement (3) ait lieu lorsque ledit au moins un polymère thermoplastique est chauffé à une température d'activation supérieure à 130°C, et qu'il se solidifie ou se re-solidifie après un abaissement de la température en dessous de la température d'activation ;
ladite couche de revêtement (3) est réalisée par application sur la couche de renfort (4) d'un composé thermoplastique comprenant :
40 à 70 % (en poids) de résines acryliques, styréniques et vinyliques en dispersion aqueuse, dans un rapport de 80:20 respectivement,
5 à 20 % (en poids) de charges inertes,
5 à 10 % (en poids) d'additifs (par exemple agents anti-mousse, produits hydrofuges, dispersants, agents d'étalement),
0,1 à 4 % (en poids) d'épaississants.

9. Procédé de fabrication selon la revendication 8, dans lequel l'étape de séchage est réalisée en plaçant la couche de support (2) dans un four à air chaud, à une température comprise entre 100°C et 250°C.

10. Procédé de fabrication selon la revendication 8 ou 9, comprenant les étapes suivantes :
- déroulement de la couche de renfort (4) constituée d'un matériau fibreux à partir d'un rouleau,
- pendant le déroulement de la couche de renfort (4), application de la couche de revêtement (3) par étalement sur la couche de renfort (4) déroulée,
- pendant l'application de la couche de revêtement (3), séchage de la couche de revêtement (3) étalée,
- pendant le séchage de la couche de revêtement (3) étalée, enroulement de la couche de support (2) obtenue après séchage de la couche de revêtement (3).
